Europäisches Patentamt

European Patent Office

Office européen des brevets

(11) Publication number: **0 492 645 A2**

# EUROPEAN PATENT APPLICATION

(21) Application number: **91122287.5**

(51) Int. Cl.5: **C08L 27/12**, C08K 7/02

(22) Date of filing: **27.12.91**

(30) Priority: **27.12.90 JP 407894/90**

(43) Date of publication of application:
**01.07.92 Bulletin 92/27**

(84) Designated Contracting States:
**DE FR GB**

(71) Applicant: **DAIKIN INDUSTRIES, LIMITED**
**Umeda Center Building 4-12 Nakazaki-nishi**
**2-chome Kita-ku**
**Osaka 530(JP)**

(72) Inventor: **Ishiwari, Kazuo, c/o Yodogawa**
**Works of Daikin**
**Industries Ltd., 1-1, Nishihitotsuya**
**Settsu-shi, Osaka-fu(JP)**
Inventor: **Miyamori, Tuyoshi, c/o Yodogawa**
**Works of Daikin**
**Industries Ltd., 1-1, Nishihitotsuya**
**Settsu-shi, Osaka-fu(JP)**
Inventor: **Yamamoto, Yoshihisa, c/o**
**Yodogawa Works of Daikin**
**Industries Ltd., 1-1, Nishihitotsuya**
**Settsu-shi, Osaka-fu(JP)**
Inventor: **Komori, Masaji, c/o Yodogawa**
**Works of Daikin**
**Industries Ltd., 1-1, Nishihitotsuya**
**Settsu-shi, Osaka-fu(JP)**

(74) Representative: **Hansen, Bernd, Dr.**
**Dipl.-Chem. et al**
**Hoffmann, Eitle & Partner Patent- und**
**Rechtsanwälte Arabellastrasse 4 Postfach**
**81 04 20**
**W-8000 München 81(DE)**

(54) Fluorine-containing meltable resin composition.

(57) A fluorine-containing meltable resin composition comprising 45 to 69 % by weight of a fluorine-containing meltable resin, 30 to 50 % by weight of a fibrous filler and 1 to 15 % by weight of a liquid crystal polymer. The composition of the present invention have good moldability and its molded product has a low linear expansion coefficient, a low mold shrinkage percentage and a high deflection temperature under load.

EP 0 492 645 A2

## BACKGROUND OF THE INVENTION

### Field of the Invention

The present invention relates to a fluorine-containing meltable resin composition comprising a fluorine-containing meltable resin together with a fibrous filler and a liquid crystal polymer. Such composition is useful as a structural material and a sliding material in an automobile industry and the like.

### Description of related art

A fluorine-containing meltable resin is used in various fields because of good properties such as heat resistance, chemical resistance (gasoline resistance) and a sliding characteristic. It is also used mainly as a sliding material in an automobile industry. When the fluorine-containing meltable resin is used as the sliding material, it is used in a combination with a metal, particularly an aluminum alloy which is recently often used for decreasing a weight. The fluorine-containing meltable resin generally has a larger linear expansion coefficient than that of a metal such as the aluminum alloy. When the fluorine-containing meltable resin is laminated on the metal, the fluorine-containing meltable resin is peeled off from the metal because of a temperature change during use. When the the fluorine-containing resin contacts with the metal, a gap arises between them because of a temperature change during use.

The fluorine-containing meltable resin generally has a large mold shrinkage percentage, and this is a problem, for example, when a part is molded by a monolithic molding together with the aluminum alloy and the like. For the use in the automobile industry, a requirement for the increase of heat resistance of the material becomes severer and severer recently because of the elevation of an environmental temperature. However, a deflection temperature under load of the fluorine-containing meltable resin is not necessarily high. In the automobile industry, the fluorine-containing meltable resin is limitedly used.

Various fillers, particularly a fibrous filler are generally incorporated into the fluorine-containing meltable resin so as to solve the above defects. For example, Japanese Patent Publication No. 13816/1977 discloses an improved method comprising mixing a carbon fiber with an ethylene/tetrafluoroethylene copolymer. It is necessary to mix a large amount of the fibrous filler with the fluorine-containing meltable resin so as to obtain a material having almost the same linear expansion coefficient as the aluminum alloy. However, when the fibrous filler is mixed in a high content, a melt viscosity of the composition is increased, moldability is extremely decreased and a surface state of a molded product is deteriorated. A plasticizer is generally added so as to improve the moldability. However, when the plasticizer is added, the properties such as stiffness and heat resistance are significantly deteriorated.

## SUMMARY OF THE INVENTION

An object of the present invention is to provide a fluorine-containing meltable resin composition which has good moldability and gives a molded product having a low linear expansion coefficient, a low mold shrinkage percentage and a high deflection temperature under load, without deteriorating the inherent properties of the fluorine-containing meltable resin.

This and other objects of the present invention are achieved by a fluorine-containing meltable resin composition comprising 45 to 69 % by weight of a fluorine-containing meltable resin, 30 to 50 % by weight of a fibrous filler and 1 to 15 % by weight of a liquid crystal polymer.

## DETAILED DESCRIPTION OF THE INVENTION

The fluorine-containing meltable resin composition according to the present invention has good moldability and gives a molded product having a low linear expansion coefficient which is almost the same as that of a metal, a low mold shrinkage percentage and a high deflection temperature under load.

Specific examples of the fluorine-containing meltable resin are tetrafluoroethylene/fluoroalkyl vinyl ether copolymer (hereinafter referred to as "PFA"), tetrafluoroethylene/hexafluoropropylene (hereinafter referred to as "FEP"), tetrafluoroethylene/hexafluoropropylene/fluoroalkyl vinyl ether copolymer (hereinafter referred to as "EPE"), tetrafluoroethylene/ethylene copolymer (hereinafter referred to as "ETFE"), polyvinylidene fluoride (hereinafter referred to as "PVDF"), polychlorotrifluoroethylene (hereinafter referred to as "PCTFE") and the like. A molecular weight of the fluorine-containing meltable resin is preferably from 50,000 to 5,000,000.

PFA comprises tetrafluoroethylene and at least one fluoroalkyl vinyl ether of the formula:

2

EP 0 492 645 A2

$CF_2 = CF-O-R_f$

wherein $R_f$ is a fluoroalkyl group having 1 to 10 carbon atoms. PFA preferably comprises 99.5 to 92 % by weight of tetrafluoroethylene and 0.5 to 8 % by weight of the fluoroalkyl vinyl ether. FEP preferably comprises 96 to 87 % by weight of tetrafluoroethylene and 4 to 13 % by weight of hexafluoropropylene. EPE preferably comprises 99.4 to 66 % by weight of tetrafluoroethylene, 0.3 to 14 % by weight hexafluoropropylene and 0.3 to 20 % by weight of fluoroalkyl vinyl ether, preferably $CF_2 = CF-O-R_f(R_f$ is the same as defined above). ETFE preferably comprises 90 to 74 % by weight of tetrafluoroethylene and 10 to 26 % by weight of ethylene.

The fluorine-containing meltable resin may contain another monomer insofar as the properties of the polymer are not deteriorated. Specific examples of another monomer are tetrafluoroethylene, hexafluoropropylene, fluoro($C_1$-$C_{10}$)alkyl vinyl ether, perfluoro($C_1$-$C_{10}$)alkyl ethylene, perfluoro($C_1$-$C_{10}$)alkyl allyl ether and a compound of the formula:

$$CF_2 = CF[OCF_2 CFX(CF_2)_m]_n OCF_2(CF_2)_p Y$$

wherein X is a fluorine atom or a trifluoromethyl group, Y is a halogen atom, m is 0 or 1 (X is a fluorine atom when m is 1), n is the number of 1 to 5, and p is the number of 0 to 2.

Specific examples of the fibrous filler are a glass fiber, a carbon fiber, an asbestos fiber, a silica fiber, a silica-alumina fiber, an alumina fiber, a zirconia fiber, a potassium titanate whisker, a polyamide fiber, a phenol fiber and the like. The carbon fiber is particularly preferable. The carbon fiber is a fibrous material which has a carbon content of at least 90 % by weight and is prepared from a starting material such as rayon, PAN (polyacrylonitrile) and a pitch.

The fibrous filler preferably has a fiber length of 20 to 1000 $\mu$m and an aspect ratio of 3 to 300. An addition amount of the fibrous filler is from 30 to 50 % by weight, preferably from 35 to 45 % by weight based on the composition. When the amount is smaller than 30 % by weight, the composition fails to have a low linear expansion coefficient, a low mold shrinkage percentage and a high deflection temperature under load. When the amount is larger than 50 % by weight, the properties possessed by the fluorine-containing meltable resin such as molding processability are deteriorated and the effects achieved by the filler cannot be obtained.

The liquid crystal polymer is intended to mean a polymer which has an anisotropic molten form. The liquid crystal polymer includes aromatic aliphatic polyesters, all-aromatic polyesters, aromatic polyazomethines, polyimidoesters and the like. A specific example of the aromatic aliphatic polyesters is a copolymer of polyethylene terephthalate and para-hydroxybenzoic acid. Specific examples of the all-aromatic polyesters are a copolymer of para-hydroxybenzoic acid and 6-hydroxy-2-naphthol, and a copolymer of parahydroxybenzoic acid, terephthalic acid and 6-hydroxy-2-naphthol. A specific example of the polyazomethines is poly(nitrilo-2-methyl-1,4-phenylenenitroethylidyne). Specific examples of polyimidoesters are a copolymer of 2,6-naphthalenedicarboxylic acid, terephthalic acid and 4-(4'-hydroxyphthalimido)phenol and a copolymer of diphenol and 4-(4'-hydroxyphthalimido)benzoic acid. The liquid crystal polymer is selected with considering the blending and the molding temperature of the fluorine-containing meltable resin composition. An addition amount of the liquid crystal polymer is from 1 to 15 % by weight, preferably from 3 to 12 % by weight based on the composition. When the amount is smaller than 1 % by weight, the moldability is not improved. When it is larger than 15 % by weight, effects achieved by the fibrous filler may be inhibited since it is difficult to finely divide a fibril formed by the liquid crystal polymer and a molded product has a low physical denseness. The liquid crystal polymer preferably has a molecular weight of 2,000 to 200,000.

The fluorine-containing meltable resin composition according to the present invention may contain various additives such as an inorganic or organic reinforcing filler, a lubricant, a pigment, a weighting agent, a stabilizing agent insofar as no effects achieved by the present invention are deteriorated.

The resin composition according to the present invention can be prepared by a conventionally known mixing procedure. For example, the components are mixed in a mixer such as a V-type blender, a tumbler or a Henschel mixer, then further mixed in a melt-blending instrument such as a twin screw extruder to prepare pellets. The resultant pellets can be shaped to prepare a product having a desired shape such as a plate or a film by means of a conventionally used molding machine which shapes a thermoplastic resin, such as an injection molding machine, a compression molding machine and an extrusion molding machine.

PREFERRED EMBODIMENTS OF THE INVENTION

3

The present invention will be illustrated by the following Examples which do not limit the present invention.

Properties of the composition prepared in Examples were evaluated by the following procedures.

Test Procedures

1) Appearance

A sample surface was visually inspected and evaluated according to the following evaluation criteria:

Good:  The surface is smooth and no flow mark is present.
Fair:  The surface is smooth but flow marks are present.
Bad:  The surface is not smooth.

2) Flexural test

Flexural strength and a flexural modulus were measured at a flexural speed of 2 mm/ min. and a room temperature according to JIS K6911 using a Tensilon universal tester manufactured by Orientech.

3) Deflection temperature under load

A deflection temperature under load was measured under a load of 18.6 kgf/cm$^2$ according to ASTM D648 using a thermal deformation measuring instrument manufactured by Yasuda Seiki.

4) Mold shrinkage percentage

Mold shrinkage percentages in a flow direction and in a direction perpendicular to the flow direction were measured according to ASTM D955.

5) Melt viscosity

A melt viscosity was measured at a given temperature (ETFE composition: 300°C, PVDF composition: 260°C) using a flow tester manufactured by Shimadzu.

6) Linear expansion coefficient

A linear expansion coefficient was measured under a load of 10 g using TMA manufactured by Rigaku Denki.

7) Friction and wear tests

Using a pin on disk type friction and wear tester manufactured by Tokyo Shikenki Seisakusho and an aluminum alloy (ADC-12) as an opponent material, friction and wear tests were conducted according to JIS K7218. A coefficient of dynamic friction was measured under a pressure of 15 kg/cm$^2$ and a velocity of 30 m/min. After the test piece was slid under a pressure of 15 kg/cm$^2$ and a velocity of 30 m/min. for a distance of 1.8 km, a wear length of the test piece was measured as a wear amount.

Examples 1 and 2

A pitch carbon fiber (M-207S manufactured by Kureha Kagaku, fiber length: 700 $\mu$m, aspect ratio: 48) and a liquid crystal polymer (Vectra A950 manufactured by Polyplastics) were homogeneously mixed with ETFE powder (Neoflon ETFE EP521 manufactured by Daikin) in a Henschel mixer in amounts shown in Table 1. The mixture was melt mixed at a temperature of 270 to 300°C by an anisotropic twin screw extruder to prepare pellets for molding. The resultant pellets were fed in an injection molding machine (cylinder temperature: 280 to 310°C, mold temperature: 110°C) so as to injection mold various test pieces. Properties of the test pieces were measured according to the test procedures as described above. The results are shown in Table 2.

Comparative Example 1

4

The same manner as in Example 1 was repeated except using no liquid crystal. The results are shown in Table 2.

Example 3

The same manner as in Example 1 was repeated except using PVDF powder (Neoflon PVDF VP810 manufactured by Daikin) instead of the ETFE powder. A mixing temperature was from 240 to 260°C, a cylinder temperature was from 260 to 280°C and a mold temperature was 100°C. The results are shown in Table 2.

Comparative Example 2

The same manner as in Example 3 was repeated except using no liquid crystal polymer. The results are shown in Table 2.

Table 1

|  | Ex. 1 | Ex. 2 | Com. Ex. 1 | Ex. 3 | Com. Ex. 2 |
|---|---|---|---|---|---|
| Fluorine-containing meltable resin (parts by weight) ETFE PVDF | 60 – | 60 – | 60 – | – 60 | – 60 |
| Carbon fiber (parts by weight) | 35 | 35 | 35 | 35 | 35 |
| Liquid crystal polymer (parts by weight) | 5 | 10 | – | 5 | – |

Table 2

| | Ex. 1 | Ex. 2 | Com. Ex. 1 | Com. Ex. 2 | Com. Ex. 3 |
|---|---|---|---|---|---|
| Appearance | Good | Good | Bad | Good | Fair |
| Flexural strength (kgf/cm$^2$) | 570 | 630 | 850 | 1540 | 1730 |
| Flexural modulus (kgf/cm$^2$) | 63,000 | 68,700 | 63,800 | 85,000 | 93,700 |
| Deflection temperature under load (°C) | 188 | 188 | 197 | 169 | 170 |
| Mold shrinkage percentage Flow direction (%) | 0.2 | 0.3 | 0.4 | 0.5 | 0.5 |
| Perpendicular direction (%) | 0.8 | 1.3 | 1.6 | 1.1 | 0.8 |
| Melt viscosity (poise) | $5.1 \times 10^4$ | $2.5 \times 10^4$ | $12.9 \times 10^4$ | $12.2 \times 10^4$ | $28.3 \times 10^4$ |
| Linear expansion coefficient (1/°C) | $2.0 \times 10^{-5}$ | $1.2 \times 10^{-5}$ | $2.1 \times 10^{-5}$ | $2.5 \times 10^{-5}$ | $2.6 \times 10^{-5}$ |
| Friction coefficient | 0.25 | 0.26 | 0.26 | 0.31 | 0.28 |
| Wear amount (μm) | 5 | 13 | 14 | 16 | 22 |

As clear from Table 2, the surface state is improved, the melt viscosity is decreased and the moldability is improved by the addition of the liquid crystal polymer. The deflection temperature under load, the mold shrinkage percentage and the sliding characteristic of the composition according to the present invention have almost no decrease and are in sufficient levels even if the liquid crystal polymer is added. The composition according to the present invention has the low linear expansion coefficient and some of compositions according to the present invention have almost the same linear expansion coefficient as an aluminum alloy.

The addition of the liquid crystal polymer to the fluorine-containing meltable resin decreases the melt viscosity and permits a high loading of the fibrous filler. Because of reinforcement effect of the fibrous filler, the molded product of the composition has a high deflection temperature under load and a low molding shrinkage percentage, and may have the same linear expansion coefficient as metals such as the aluminum alloy. The composition according to the present invention can be used as a sliding material and a structural material.

**Claims**

1. A fluorine-containing meltable resin composition comprising 45 to 69 % by weight of a fluorine-containing meltable resin, 30 to 50 % by weight of a fibrous filler and 1 to 15 % by weight of a liquid crystal polymer.

2. The composition according to claim 1, wherein the fluorine-containing meltable resin is selected from the group consisting of tetrafluoroethylene/fluoroalkyl vinyl ether copolymer, tetrafluoroethylene/hexafluoropropylene, tetrafluoroethylene/hexafluoropropylene/fluoroalkyl vinyl ether copolymer, tetrafluoroethylene/ethylene copolymer, polyvinylidene fluoride and polychlorotrifluoroethylene.

3. The composition according to claim 1, wherein the fibrous filler has a fiber length of 20 to 1000 $\mu$m and an aspect ratio of 3 to 300.

4. The composition according to claim 1, wherein the fibrous filler is selected from the group consisting of a glass fiber, a carbon fiber, an asbestos fiber, a silica fiber, a silica-alumina fiber, an alumina fiber, a zirconia fiber, a potassium titanate whisker, a polyamide fiber and a phenol fiber.

5. The composition according to claim 1, wherein the fibrous filler is a carbon fiber.

6. The composition according to claim 1, wherein the liquid crystal polymer is selected from the group consisting of aromatic aliphatic polyesters, all-aromatic polyesters, aromatic polyazomethines and polyimidoesters.